# EUROPÄISCHE PATENTSCHRIFT

(11) **EP 0 540 836 B1**
(45) Veröffentlichungstag und Bekanntmachung des Hinweises auf die Patenterteilung: **03.04.1996**
(21) Anmeldenummer: 92113907.7
(22) Anmeldetag: 14.08.1992
(51) Int. Cl.: C08H 5/02, C08G 14/04, C08G 14/14, D04H 1/60, F16D 69/02

(54) **Ligninmodifizierte Bindemittelgemische und Verfahren zur deren Herstellung**
Binder mixture modified with lignin and process for producing the same
Mélange liant modifié par la présence de lignine et procédé pour sa préparation

(30) Priorität: 07.11.1991 DE 4136563
(43) Veröffentlichungstag der Anmeldung: 12.05.1993
(73) Patentinhaber: RÜTGERSWERKE AKTIENGESELLSCHAFT, D-60326 Frankfurt (DE)
(72) Erfinder: Gardziella, Arno, Dr., W-5810 Witten-Rüdinghausen (DE); Hansen, Achim, Dr., W-5860 Iserlohn-Letmathe (DE); Schröter, Stephan, W-5860 Iserlohn (DE); Suren, Josef, W-4798 Wünnenberg Haaren (DE)

(56) Entgegenhaltungen:
- DE-A- 2 408 441
- US-A- 5 010 156
- KUNSTSTOFFE Bd. 39, Nr. 3, 1949, MUNCHEN DE Seiten 71 - 72 KIPPHAN 'Lignin aus der Holzverzuckerung als Rohstoff für Kunstharze'

## Beschreibung

Die Erfindung betrifft neue Bindemittel, die durch Umsetzung von niedermolekularem Lignin aus dem Organosolv-Verfahren mit Phenol und Formaldehyd erhalten werden. Diese neuen Bindemittel sind als solche oder im Gemisch mit herkömmlichen Phenolnovolaken zur Herstellung von härtbaren Formmassen und hochtemperaturbeständigen Formstoffen, feuerfesten Erzeugnissen und Kohlenstoffwerkstoffen ebenso geeignet wie von Reibbelägen und Textilvliesen.

Während man früher im Bereich kohlenstoffbildender Bindemittel für Kohlenstoffwerkstoffe, Sintermassen und feuerfester Erzeugnisse hauptsächlich Teere bzw. Peche, die unter anderem polycyclische Kohlenwasserstoffe enthalten, als Ausgangsmaterial für eine gute Kohlenstoffbildung verwendet hat, gewinnen heute synthetische Harze speziell Furan- und Phenolharze, als Bindemittel Bedeutung. Sie sind im Harzzustand frei von toxischen polycyclischen Kohlenwasserstoffen, wie z.B. Benzo-a-pyren, und entwickeln solche bei der Pyrolyse nur in sehr geringem Maße. Sie vermeiden darüber hinaus bei erhöhten Temperaturen Rauch- und Rußentwicklung und verbessern gleichzeitig die Qualität und die Verarbeitbarkeit der Feuerfestmassen. Diese Harze sind jedoch im Vergleich zu teerstämmigen Bindemitteln recht teuer. Währenddessen fällt als Nebenprodukt der Zellstoffgewinnung in großen Mengen ein phenolhaltiges Polymer, das Lignin, als Bestandteil der sogenannten Schwarzlaugen oder Sulfitlaugen an, in denen es als Phenolat gelöst ist.

Ein geringer Teil dieses Lignins wird zwar als Bindemittel für Pressplatten geringer Qualität, als Dispergiermittel, als Schaumstabilisator, als Stabilisator für Asphaltemulsionen oder für andere Zwecke verwendet.

Der größte Teil des anfallenden Lignins wird jedoch, da er bisher nicht anders entsorgt werden kann, verbrannt und dient so als billiger Energiespender für den Zellstoffaufschluß, obwohl es als hochwertiger, nachwachsender Rohstoff für bisher aus kohle- oder mineralölstämmigen Grundstoffen hergestellte Produkte denkbar wäre.

Trotz intensiver Untersuchungen wurde bislang kein geeignetes Verfahren gefunden, das es ermöglicht, z. B. Bindemittelgemische auf der Basis von Phenolharzen durch Ligninharze unter Beibehaltung der Qualitätsmerkmale zu ersetzen oder auch nur zu strecken.

Das aus dem Zellstoffaufschluß- oder Kraft-Prozess gewonnene sulfonierte Lignin ist an sich reaktionsträge, kann aber durch Umsetzung mit Phenol in Gegenwart einer Säure reaktiviert und durch anschließende Reaktion mit Formaldehyd zu einem Harz umgesetzt werden, das mit Phenolharz mischbar ist. Sulfoniertes Lignin, das in Gegenwart einer Base mit Formaldehyd umgesetzt und anschließend mit Phenol kondensiert worden ist, eignet sich ebenfalls als Streckmittel für Phenolharze (Sundstrom, D. W.; Klei, H. E.; Biotech. Bioeng. Symp. 12, 45 - 56 (1982).

Es zeigte sich jedoch, daß die beschriebenen sulfonierten Ligninderivate nicht in beliebiger Menge mit den Phenolharzen vermischt werden können, da sie eine sehr hohe Viskosität besitzen und mit zunehmendem Ligningehalt die Klebkraft des Harzgemisches stark abnimmt. Ein Phenolharz, das 10 % Ligninsulfonsäurederivat enthält, zeigt bereits keine zufriedenstellenden Eigenschaften mehr und ist relativ feuchtigkeitsempfindlich.

Ähnlich wie diese Ligninsulfonsäure-Harzgemische verhalten sich auch Harze, die in gleicher Weise unter Verwendung von Kraft-Lignin- oder Alkaliligninfraktionen hergestellt werden können.

Es wurde auch versucht, Phenolharze teilweise durch Organosolv-Lignin zu ersetzen. Unter vergleichsweise milden Bedingungen wird dieses Lignin chemisch fast unverändert aus dem verwendeten Holz in zwei Stufen ausgelaugt.

Mit Wasserdampf und einem Alkohol/Wasser-Gemisch vorbehandelte Holzschnitzel werden in einem ersten Schritt mit einem Alkohol/Wasser-Gemisch bei fast 200°C und hohem Druck ausgelaugt. Es wird eine ligninhaltige, schwach saure Lösung erhalten. Die partiell ausgelaugten Holzschnitzel werden anschließend mit einer Kochlauge behandelt, die z. B. aus einem Methanol/Wasser/NaOH-Gemisch besteht, und mit einer geringen Menge eines Katalysators versetzt ist. Aus dieser zweiten kontinuierlich durchgeführten Auslaugung fällt laufend eine mit Holzinhaltsstoffen, insbesondere mit niedermolekularen Ligninen, Hemicellulosen und Cellulose gesättigte alkalische Lösung an. Hieraus wird der enthaltene Alkohol bis zu 90 % abdestilliert und die sogenannte Schwarzlauge erhalten. Aus beiden Fraktionen kann das enthaltene Lignin pulverförmig abgetrennt werden. Es ist in Ketonen, wie z. B. Aceton, oder in speziellen Alkoholen, wie z.B. Furfuryalkohol, löslich und in dieser Form mit einem Novolak mischbar.

Eine Mischung von Lignin zu Phenolnovolak im Verhältnis von 1 : 1 und Textilfasern als Füllstoff zur Herstellung von Textilvlies ergibt jedoch bei einem Festharzgehalt von zusammen ca. 30 % (bezogen auf das Gewicht der Gesamtmischung) einen starken Abfall der Kalt- und Heißbiegefestigkeit im Vergleich zu herkömmlichen Phenolnovolaken. Die Festigkeiten nehmen mit zunehmendem Ligninanteil noch stärker ab.

Versuche, die Eigenschaften des Organosolv-Lignins durch verschiedene Verfahrensweisen beim Vorreagieren mit Phenol und Formaldehyd zu verbessern, führten zu keinem nennenswerten Erfolg. Es können auf diese Weise zwar Harzmischungen gewonnen werden, die zur Herstellung von Press- und Verbundplatten, sowie zum Verkleben von Holzfunieren geeignet sind; hochwertige Produkte, wie hochtemperaturbeständige Formstoffe, feuerfeste Erzeugnisse und insbesondere Reibbeläge, können damit jedoch nicht hergestellt werden, da die gewünschten Eigenschaftsprofile dieser Produkte, wie z.B. in der Kohlenstoffausbeute und der Festigkeit, den Anforderungen nicht genügen.

Es ist daher Aufgabe der Erfindung, ein Bindemittelgemisch zur Verfügung zu stellen, das Organosolv-Lignin in großer Menge als preiswerten und zugleich hochwertigen Rohstoff enthält, wobei das Bindemittelgemisch die oben beschriebenen Anforderungen erfüllt und dessen Qualität die der bisher üblichen ligninhaltigen Bindemittelgemische übertrifft. Es ist weiterhin Aufgabe der Erfindung, ein Verfahren bereitzustellen, durch das die neuen Bindemittelgemische hergestellt werden können.

Die Lösung der Aufgabe erfolgt durch ein Verfahren zur Herstellung eines Lignin-Phenol-Novolaks nach einem Verfahren gemäß den Ansprüchen 1 bis 3, und durch einen nach diesem Verfahren hergestellten Lignin-Phenol-Novolak gemäß Anspruch 4, der als Bindemittel für die Herstellung von härtbaren Formmassen, Formkörpern, Pressmassen, Textilvliesen, feuerfesten Massen und Reibbelägen gemäß Anspruch 17 verwendet werden kann. Insbesondere erfolgt die Lösung der Aufgabe durch die Herstellung eines Bindemittelgemischs, bestehend aus dem erfindungsgemäßen Lignin-Phenol-Novolak und einem herkömmlichen Phenolnovolak, nach einem Verfahren gemäß den Ansprüchen 5 bis 8 und seiner besonderen Ausgestaltung gemäß den Ansprüchen 9 und 10, sowie durch die Herstellung der oben genannten Produkte, evtl. unter Verwendung von Härtern gemäß den Ansprüchen 13 bis 16.

Das im Organosolv-Verfahren unter vergleichsweise milden Bedingungen schwefelfrei anfallende Lignin besitzt, da seine chemische Struktur durch das Einwirken der Prozessbedingungen nur geringfügig verändert worden ist, ein relativ niedriges mittleres Molgewicht. Die Hauptmenge des nach dem Organosolv-Verfahren durch Auslaugen isolierten Lignins besitzt ein mittleres Molgewicht von etwa 500 bis 3.000, während nur geringe Mengen mittlere Molgewichte von 18.000 bis 20.000 und höher aufweisen. In der stark alkalischen Schwarzlauge der zweiten Auslaugungsstufe sind dagegen nur Lignine mit mittleren Molgewichten von etwa 1.000 bis 4.000 enthalten. Durch einfache technische Maßnahmen können auch noch Fraktionen mit niedrigerem mittlerem Molgewicht gewonnen werden.

Es wurde nun gefunden, daß die im Organosolv-Verfahren anfallenden Ligninfraktionen mit niedrigem mittleren Molgewicht durch Vorreaktion mit einem Phenol und anschließende Kondensation mit einem Aldehyd zu hochwertigen Harzen modifiziert werden können, die in einfacher Weise mit einem Phenolnovolak und evtl. anderen Zusatzstoffen zu Bindemitteln vermischt werden können, die in Formmassen eingearbeitet, nach dem Aushärten einen besonders guten Verbund zwischen dem ligninmodifizierten Bindemittel und den zugesetzten Füllstoffen ergeben.

So hergestellte Formteile besitzen überraschenderweise im Gegensatz zu bisher bekannten Organosolv-Lignin-Phenolnovolak-Bindemittelgemischen gute mechanische, thermische und elektrische Eigenschaften, die denen der mit herkömmlichen, nicht modifizierten Phenolharzen hergestellten Formteile entsprechen. Besonders gute Eigenschaften zeigen sich bei der Verwendung der erfindungsgemäßen Bindemittelgemische zur Herstellung von Feuerfestmassen, da sie zu hohen Gründstandfestigkeiten und überraschenderweise zu hohen Kohlenstoffausbeuten führen.

Zur Modifizierung werden vorzugsweise pulverförmig isolierte Lignine mit Phenol und Formaldehyd umgesetzt.

Harze mit besonders guten Eigenschaften werden erhalten, wenn insbesondere Lignine mit Molgewichten kleiner als 2.000, vorzugsweise 600-1200, umgesetzt werden.

Zur Herstellung des erfindungsgemäßen Bindemittels wird die abgetrennte Ligninfraktion im Verhältnis 1 : 20 bis 3 : 1 mit Phenol, bezogen auf den Gewichtsanteil des in der Lösung enthaltenen Lignins, versetzt und bei einer Temperatur im Bereich von 100 bis 180°C thermisch behandelt. Anschließend wird der pH-Wert der Lösung auf einen Wert kleiner 4 eingestellt. Als Säuren zur Regulierung des pH-Wertes oder als Katalysatoren zur Novolak-Kondensation können alle üblichen Säuren verwendet werden. Besonders bevorzugt wird zu diesem Zweck Oxalsäure verwendet. Danach werden 0,2 bis 0,9 Mol Formaldehyd pro Mol Phenol hinzugefügt und die folgende Kondensation bei 90 bis 100°C durchgeführt. Der so erhaltene Novolak wird in an sich bekannter Weise durch Abdestillieren des Wassers abgetrennt, evtl. nochmal gewaschen und getrocknet, gemahlen und pulverisiert.

Es wird auf diese Weise ein Lignin-Phenol-Novolak erhalten, der als solcher zur Herstellung hochwertiger Form- und Pressmassen weiterverarbeitet werden kann. Er kann aber auch mit einem nach bekannten Methoden hergestellten Phenolnovolak vermischt werden und zu Feuerfestmassen, härtbaren Formmassen, Reibbelägen oder Textilvliesen verarbeitet werden.

Zur Herstellung der erfindungsgemäßen Bindemittelgemische durch Vermischen eines herkömmlichen Phenolnovolaks mit dem oben beschriebenen Lignin-Phenol-Novolak werden die beiden Novolake im Gewichtsverhältnis 10 : 90 bis 90 : 10, vorzugsweise 30 : 70 bis 70 : 30 intensiv miteinander vermischt.

Diese Mischungen können in einem Lösungsmittel, wie z. B. Methanol, Ethanol, Isopropanol, Aceton, Furfurylalkohol, Ethylenglykol oder anderen im Gewichtsverhältnis von 30 : 70 bis 70 : 30, vorzugsweise 45 : 55 bis 55 : 45, gelöst werden. Als Lösungsmittel wird bevorzugt Furfurylalkohol verwendet, da es nicht nur als Lösungsmittel wirksam ist, sondern auch in speziellen Fällen als Reaktionspartner während der Aushärtung dienen kann.

Als Novolak sind für diesen Zweck alle im sauren Medium hergestellten Kondensationsprodukte auf der Basis von Phenolen, Kresolen und Bisphenolen mit Formaldehyd in einem molaren Verhältnis von Phenol zu Formaldehyd von 1 : 0,8 bis 1 : 0,2 einsetzbar.

Das Vermischen der beiden Novolake kann in an sich bekannter Weise erfolgen. Günstig wirkt es sich aus, wenn dieses unter Einwirkung hoher Scherkräfte bei Temperaturen von 100 bis 200°C, vorzugsweise 130 bis 160°C, erfolgt. Zu diesem Zweck kann das vorvermischte Novolakgemisch auf beheizte Walzen aufgegeben werden.

Nach einer Walzzeit von etwa 2 bis 10 min hat sich ein zusammenhängendes Walzenfell gebildet, das abgezogen werden kann und nach dem Abkühlen zu einem Granulat mit einer Korngröße kleiner 2 mm vermahlen wird.

Das Rohgemisch läßt sich aber auch ebensogut in an sich bekannten und für derartige Prozesse üblicherweise eingesetzten beheizbaren Geräten, wie z. B. im Doppelschneckenextruder, Trog- oder Muldenkneter oder in einem Co-Kneter vermischen. Die Temperatur wird dabei so eingestellt, daß eine gute Vermischung der einzelnen Komponenten miteinander erfolgt, jedoch weder eine Zersetzung des eingesetzten Materials noch eine vorzeitige Aushärtung des Harzgemischs erfolgt.

Aus diesem Arbeitsprozeß wird ein homogenes Produkt erhalten, das nach dem Abkühlen auf Raumtemperatur, evtl. getrocknet und pulverisiert werden kann und das sich hervorragend als Bindemittel oder Bindemittelkomponente für Pressmassen, härtbare Formmassen, feuerfeste Massen, Reibmaterial oder Textilvliese eignet.

Zur weiteren Verarbeitung können diesem Bindemittelgemisch 4 bis 14 Gew.-% eines Härters, vorzugsweise Hexamethylentetramin, hinzugefügt werden. Geeignet sind als Härter aber auch reaktive Harze wie Epoxidharze, Phenolresole, Aminoharze oder deren Gemische. Außerdem können 0,05 bis 1,2 Gew.-% eines Gleit- und Trennmittels, 4 bis 90 Gew.-% Füllstoffe, aber auch 0 bis 20 Gew.-% Fasermaterialien, wie z. B. Glasfasern zugesetzt werden.

Als Gleit- und Trennmittel werden bevorzugt Me-Stearat (Me = Al, Ca, Mg, Li, Zn) in einer Menge von 0,1 bis 0,8 Gew.-% und Wachs in einer Menge von ebenfalls 0,1 bis 0,8 Gew.-%, insbesondere Amidwachs, Esterwachs, Montanwachs oder Paraffinwachs, zugegeben. Zur Verbesserung des Walzverhaltens der duroplastischen Formmasse wird vorzugsweise Kreide als Füllstoff untergemischt.

Die im folgenden gegebenen Beispiele dienen zur weiteren Erläuterung der Erfindung, sollen sie jedoch nicht auf diese beschränken.

### Beispiele

### Beispiel 1

3 kg Phenol, 2 kg Lignin aus dem Organosolv-Verfahren mit einem Sinterpunkt von ca. 110° C und einem mittleren Molgewicht von ca. 1100 werden mit 50 g Oxalsäure versetzt und bei einer Temperatur von 150° C 2 Stunden gehalten.

Danach wird auf 100° C abgekühlt und bei dieser Temperatur sowie unter Rückfluß 1,45 kg Formalin (45 %ig) im Laufe von 2 1/2 Stunden zugetropft. Es wird am Rückfluß weitergekocht bis der freie Formaldehydgehalt der Reaktionslösung weniger als 0,3 % beträgt.

Danach werden Wasser und Monomere abdestilliert bis der Gehalt an freiem Phenol in der Harzschmelze < 0,5 % beträgt und das entstandene Lignin-Phenolharz einen Schmelzpunkt von ca. 90°C aufweist.

Das Harz wird ausgetragen und nach dem Erkalten feinst zerkleinert, in einer Pralltellermühle pulversiert und mit 6 % Hexamethylentetramin homogen vermischt.

### Beispiel 2

760 g erfindungsgemäßes Pulverharz aus Beispiel 1 wird mit einer Mischung aus 2 kg Stahlwolle,
1 kg Messingspäne, 700 g Koks, 320 g Graphit,
320 g Polyaramidfaser (2 mm), 180 g Glasfaser (2 mm),
1 kg Bariumsulfat und 500 g Magnesiumoxyd intensiv vermischt.

Die Mischung wird in üblicher Weise zur Herstellung von Reibbelägen verwendet. Der Reibwert, ermittelt an Prüfkörpern, welche 30 Sekunden je Millimeter Schichtdicke bei 170° C verpreßt und 10 Stunden bei 200° C nachgehärtet wurden, liegt bei ca. 0,40.

### Beispiel 3

70 Gewichtsteile Textilfasergemisch werden mit 30 Gewichtsteilen des erfindungsgemäßem Pulverharzes aus Beispiel 1 innig vermischt. Zur Herstellung von Faservlies wird das Material einer aerodynamischen Vliesbildung unterworfen und auf einem Lochsiebblech abgelegt. Das so gewonnene ungehärtete Textilvliesgebilde wird in einem Wärmeschrank bei ca. 120° C vorgehärtet und dann in einer Presse bei 180° C zu Platten von 250 mm x 250 mm verpreßt.

Die so gewonnenen Platten werden bezüglich Festigkeit (Belastung und Durchbiegung) und Geruch mit Produktionsplattenmaterial verglichen, bei dem ein Standardpulverharz auf Phenol-Novolak-Hexamethylentetramin-Basis zur Anwendung kam.

### Vergleiche in der Festigkeit

### Keine Unterschiede

### Vergleiche im Geruchtest (Geruchtest nach Ford)

Note 1,9 bis 2,3 bei Verwendung von Pulverharz gemäß der Erfindung, Note 2,2 bis 2,6 beim Material aus der Produktion mit unmodifiziertem Pulverharz (die Geruchsqualität steigt mit sinkender Benotung).

### Beispiel 4

5 kg Phenol, 5 kg Lignin-Fraktion aus dem Organosolv-Verfahren, mit einem Schmelzpunkt von 80 bis 82° C nach DIN ISO 10082 und einem mittleren Molgewicht von ca. 800 werden auf eine Temperatur von 150° C gebracht und dort 2 Stunden gehalten.

Danach wird auf 100° C abgekühlt, 100 g Oxalsäure hinzugefügt und bei dieser Temperatur sowie unter Rückfluß 2,4 kg Formalin (45 %ig) im Laufe von 3 Stunden zugetropft. Es wird am Rückfluß weitergekocht bis der freie Formaldehyd-Gehalt der Reaktionslösung weniger als 0,3 % beträgt.

Danach werden Wasser und Monomere abdestilliert, bis der Gehalt an freiem Phenol in der Harzschmelze < 0,5 % beträgt und das entstandene Lignin-Phenol-Harz einen Schmelzpunkt nach DIN ISO 10082 von ca. 90°C aufweist.

Das Harz wird ausgetragen und nach dem Erkalten zerkleinert.

### Beispiel 5

3 kg erfindungsgemäßes Harz aus Beispiel 4 werden mit 3 kg Phenol-Novolak-Harz mit einem Schmelzpunkt nach DIN ISO 10082 von 80° C in 4 kg wasserfreiem Furfurylalkohol gelöst. Die Lösung enthält weniger als 0,2 % Wasser.

### Beispiel 6

11,14 kg einer Mischung aus Dolomit verschiedenster Körnungen wird mit 60 g Hexamethylentetramin und 800 g erfindungsgemäßer Harzlösung aus Beispiel 5 homogen vermischt.

Nach dem Verpressen zu Formkörpern ergibt sich eine Kaltdruckfestigkeit von ca. 80 N/mm.

Die kunstharzgebundenen Formkörper werden dann bis zu einer Temperatur on 180° C erhitzt und dabei gehärtet. Sie besitzen dann eine Festigkeit, die so groß ist, daß sie gut transportiert und in Aggregaten eingebaut werden können.

Die Dolomitkörper konnten auch ohne Zerfall gut gelagert werden. Die ermittelte Kaltbiegefestigkeit liegt bei den gehärteten Formkörpern bei ca. 22 N/mm.

Parallel durchgeführte Temperversuche bis 1000° C anhand von Formkörpern ergaben einen Kohlenstoffgehalt von 54 % bezogen auf den Harzgehalt der Harzlösung aus Beispiel 5.

### Beispiel 7

4 kg Harz aus Beispiel 4 wird vermahlen und mit 2 kg Phenol-Novolak mit einem Schmelzpunkt nach DIN ISO 10082 von ca. 85°C, 750 g Hexamethylentetramin, 18 g Montanwachs, 60 g Amidwachs, 10 g Calcium-Stearat und 7 kg Weichholzmehl innig vorgemischt und auf 100 bis 130°C geheizte Walzen aufgegeben.

Die Masse wird in einer Walzzeit von etwa 3 bis 4 Minuten zu einem zusammenhängenden Walzfell verdichtet und homogenisiert.

Das entstandene Walzfell wird abgezogen und nach dem Erkalten zu einem Granulat von < 2 mm vermahlen.

Das Granulat wird im Preßverfahren zu Formkörpern geformt und gehärtet. Die physikalischen Werte der Formkörper liegen über den Rahmen der Phenolharzformmassen vom Typ 31 nach DIN 7708. Die damit hergestellten Formteile zeichnen sich durch eine gute Oberfläche aus.

## Patentansprüche

1. Verfahren zur Herstellung eines Bindemittels für Formmassen und Formkörper, **dadurch gekennzeichnet,** daß niedermolekulares Lignin aus dem Organosolv-Verfahren
a. mit Phenol im Gewichtsverhältnis 1 : 20 bis 3 : 1 bei Temperaturen von 100 bis 180°C vorreagiert wird und
b. nach Einstellung eines sauren pH-Werts mit 0,2 bis 0,9 Mol Formaldehyd pro Mol Phenol bei Temperaturen von 60 bis 120°C kondensiert wird.

2. Verfahren gemäß Anspruch 1, **dadurch gekennzeichnet,** daß niedermolekulares Lignin aus dem Organosolv-Verfahren mit einem mittleren Molgewicht von 500 bis 3.000 umgesetzt wird.

3. Verfahren gemäß Anspruch 1, **dadurch gekennzeichnet**, daß niedermolekulares Lignin aus dem Organosolv-Verfahren mit einem mittleren Molgewicht von 600 bis 1.200 umgesetzt wird.

4. Lignin-Phenol-Novolak hergestellt nach einem Verfahren gemäß der Ansprüche 1 bis 3.

5. Verfahren zur Herstellung eines Bindemittelgemischs, **dadurch gekennzeichnet**, daß
a. ein Lignin-Phenol-Novolak gemäß Anspruch 4 mit einem Phenolnovolak im Gewichtsverhältnis 10 : 90 bis 90 : 10 bei einer Temperatur von 100 bis 200°C intensiv vermischt wird und
b. das erkaltete, evtl. getrocknete, homogene Gemisch fein gemahlen oder granuliert wird.

6. Verfahren zur Herstellung eines Bindemittelgemischs nach Anspruch 5, **dadurch gekennzeichnet**, daß ein Lignin-Phenol-Novolak gemäß Anspruch 4 mit einem Phenolnovolak im Gewichtsverhältnis 30 : 70 bis 70 : 30 bei einer Temperatur von 100 bis 200°C intensiv vermischt wird.

7. Verfahren gemäß den Ansprüchen 5 und 6 zur Herstellung eines Bindemittelgemischs, **dadurch gekennzeichnet**, daß die intensive Vermischung bei 130 bis 160°C erfolgt.

8. Verfahren gemäß den Ansprüchen 5 bis 7 zur Herstellung eines Bindemittelgemischs, **dadurch** **gekennzeichnet**, daß die intensive Vermischung unter Einwirkung hoher Scherkräfte in einem Kneter oder Extruder erfolgt.

9. Verfahren zur Herstellung eines Bindemittelgemisches, **dadurch gekennzeichnet**, daß ein Lignin-Phenolnovolak gemäß Anspruch 4 mit einem Phenolnovolak im Verhältnis 10 : 90 und 90 : 10 in einem Lösungsmittel der Gruppe Methanol, Ethanol, Isopropanol, Aceton, Furfurylalkohol und Ethylenglykol im Gewichtsverhältnis 30 : 70 bis 70 : 30 gelöst wird.

10. Verfahren zur Herstellung eines Bindemittelgemischs gemäß Anspruch 9, **dadurch gekennzeichnet**, daß das einzusetzende Gewichtsverhältnis von Lignin-Novolak zu Phenol-Novolak 45 : 55 bis 55 : 45 beträgt.

11. Bindemittelgemisch, hergestellt gemäß den Ansprüchen 5 bis 10.

12. Bindemittelgemisch, hergestellt gemäß den Ansprüchen 5 bis 10, **dadurch gekennzeichnet**, daß zu seiner Härtung Hexamethylentetramin oder reaktive Harze, wie z. B. Phenolresole, Epoxidharze oder stickstoffhaltige Polymere verwendet werden.

13. Verwendung des Bindemittelgemischs gemäß den Ansprüchen 11 und 12 zur Herstellung von härtbaren Formmassen.

14. Verwendung des Bindemittelgemischs gemäß den Ansprüchen 11 und 12 zur Herstellung von Textilvliesen.

15. Verwendung des Bindemittelgemischs gemäß den Ansprüchen 11 und 12 zur Herstellung von feuerfesten Massen.

16. Verwendung des Bindemittelgemischs gemäß den Ansprüchen 11 und 12 zur Herstellung von Reibbelägen.

17. Verwendung des Lignin-Phenol-Novolaks gemäß Anspruch 4 als Bindemittel zur Herstellung von härtbaren Formmassen.

18. Verwendung des Lignin-Phenol-Novolaks gemäß Anspruch 4 als Bindemittel zur Herstellung von Formkörpern.

19. Verwendung des Lignin-Phenol-Novolaks gemäß Anspruch 4 als Bindemittel zur Herstellung von Pressmassen.

20. Verwendung des Lignin-Phenol-Novolaks gemäß Anspruch 4 als Bindemittel zur Herstellung von Textilvliesen.

21. Verwendung des Lignin-Phenol-Novolaks gemäß Anspruch 4 als Bindemittel zur Herstellung von feuerfesten Massen.

22. Verwendung des Lignin-Phenol-Novolaks gemäß Anspruch 4 als Bindemittel zur Herstelllung von Reibbelägen.

## Claims

1. A process for preparing a binder for moulding materials and moulding bodies, **characterized in that** low-molecular lignin from the organosolv process
a) is pre-reacted with phenol in a weight ratio of from 1 : 20 to 3 : 1 at temperatures of from 100 to 180°C, and
b) after adjusting to an acid pH value is condensed with from 0·2 to 0·9 mol of formaldehyde *per* mol of phenol at temperatures of from 60 to 120°C.

2. A process according to Claim 1, **characterized in that** low-molecular lignin from the organosolv process with an average molecular weight of from 500 to 3,000 is reacted.

3. A process according to Claim 1, **characterized in that** low-molecular lignin from the organosolv process with an average molecular weight of from 600 to 1,200 is reacted.

4. A lignin phenol novolak prepared in accordance with a process according to Claims 1 to 3.

5. A process for preparing a binder mixture, **characterized in that**
a) a lignin phenol novolak according to Claim 4 is intimately mixed with a phenol novolak in a weight ratio of from 10:90 to 90:10 at a temperature of from 100 to 200°C, and
b) the cooled, and if necessary dried, homogeneous mixture is finely ground or granulated.

6. A process for preparing a binder mixture according to Claim 5, **characterized in that** a lignin phenol novolak according to Claim 4 is intimately mixed with a phenol novolak in a weight ratio of from 30:70 to 70:30 at a temperature of from 100 to 200°C.

7. A process according to Claims 5 and 6 for preparing a binder mixture, **characterized in that** the intimate mixing takes place at from 130 to 160°C.

8. A process according to Claims 5 to 7 for preparing a binder mixture, **characterized in that** the intimate mixing takes place under the action of high shear forces in a kneader or extruder.

9. A process for preparing a binder mixture, **characterized in that** a lignin phenol novolak according to Claim 4 is dissolved with a phenol novolak in a ratio of [between] 10:90 and 90:10 in a solvent of the group of methanol, ethanol, isopropanol, acetone, furfuryl alcohol and ethylene glycol in a weight ratio of from 30:70 to 70:30.

10. A process for preparing a binder mixture according to Claim 9, **characterized in that** the weight ratio of lignin novolak to phenol novolak to be applied is from 45:55 to 55:45.

11. A binder mixture prepared according to Claims 5 to 10.

12. A binder mixture prepared according to Claims 5 to 10, **characterized in that** hexamethylenetetramine or reactive resins, such as for example phenol resols, epoxy resins or nitrogen-containing polymers are used for the hardening thereof.

13. Use of the binder mixture according to Claims 11 and 12 for producing hardenable moulding compounds.

14. Use of the binder mixture according to Claims 11 and 12 for producing textile fleeces.

15. Use of the binder mixture according to Claims 11 and 12 for producing refractory compounds.

16. Use of the binder mixture according to Claims 11 and 12 for producing friction linings.

17. Use of the lignin phenol novolak according to Claim 4 as a binder for producing hardenable moulding compounds.

18. Use of the lignin phenol novolak according to Claim 4 as a binder for producing moulding bodies.

19. Use of the lignin phenol novolak according to Claim 4 as a binder for producing press-moulding compounds.

20. Use of the lignin phenol novolak according to Claim 4 as a binder for producing textile fleeces.

21. Use of the lignin phenol novolak according to Claim 4 as a binder for producing refractory compounds.

22. Use of the lignin phenol novolak according to Claim 4 as a binder for producing friction linings.

## Revendications

1. Procédé de préparation d'un liant pour des masses de façonnage et des corps de moulage, caractérisé en ce que de la lignine de faible poids moléculaire provenant du procédé organosolv
a. est amenée à réagir préalablement avec du phénol dans un rapport pondéral de 1/20 à 3/1, à des températures de 100 à 180°C, et
b. est condensée après ajustement d'une valeur de pH acide avec 0,2 à 0,9 mole de formaldéhyde par mole de phénol, à des températures de 60 à 120°C.

2. Procédé suivant la revendication 1, caractérisé en ce qu'on fait réagir de la lignine de faible poids moléculaire provenant du procédé organosolv et ayant un poids moléculaire moyen de 500 à 3.000.

3. Procédé suivant la revendication 1, caractérisé en ce qu'on fait réagir de la lignine de faible poids moléculaire provenant du procédé organosolv et ayant un poids moléculaire moyen de 600 à 1.200.

4. Novolaque de lignine-phénol préparée suivant un procédé selon l'une des revendications 1 à 3.

5. Procédé de préparation d'un mélange de liants, caractérisé en ce que
a. une novolaque de lignine-phénol suivant la revendication 4 est mélangée de manière intense à une novolaque phénolique dans un rapport pondéral de 10/90 à 90/10 à une température de 100 à 200°C et
b. le mélange homogène refroidi, éventuellement séché, est finement moulu ou granulé.

6. Procédé de préparation d'un mélange de liants suivant la revendication 5, caractérisé en ce qu'on mélange de manière intense, à une température de 100 à 200°C, une novolaque de lignine-phénol suivant la revendication 4 et une novolaque phénolique dans un rapport pondéral de 30/70 à 70/30.

7. Procédé de préparation d'un mélange de liants suivant l'une des revendications 5 et 6, caractérisé en ce que le mélange intense a lieu à 130 jusqu'à 160°C.

8. Procédé de préparation d'un mélange de liants suivant l'une des revendications 5 à 7, caractérisé en ce que le mélange intense a lieu dans un pétrisseur ou une extrudeuse, sous l'action de fortes forces de cisaillement.

9. Procédé de préparation d'un mélange de liants caractérisé en ce qu'on dissout une novolaque de lignine-phénol suivant la revendication 4 avec une novolaque phénolique dans un rapport de 10/90 à 90/10 dans un solvant du groupe méthanol, éthanol, isopropanol, acétone, alcool furfurylique et éthylèneglycol dans un rapport pondéral de 30/70 à 70/30.

10. Procédé de préparation d'un mélange de liants suivant la revendication 9, caractérisé en ce que le rapport pondéral à mettre en oeuvre entre la novolaque de lignine et la novolaque phénolique est de 45/55 à 55/45.

11. Mélange de liants, préparé suivant l'une des revendications 5 à 10.

12. Mélange de liants, préparés suivant l'une des revendications 5 à 10, caractérisé en ce que, pour son durcissage, on utilise de l'hexaméthylènetétramine ou des résines réactives, telles que par exemple des résols phénoliques, des résines époxy ou des polymères contenant de l'azote.

13. Utilisation du mélange de liants suivant l'une des revendications 11 et 12, pour la préparation de masses de façonnage durcissables.

14. Utilisation du mélange de liants suivant l'une des revendications 11 et 12, pour la préparation de voiles textiles.

15. Utilisation du mélange de liants suivant l'une des revendications 11 et 12, pour la préparation de masses réfractaires.

16. Utilisation du mélange de liants suivant l'une des revendications 11 et 12, pour la préparation de garnitures de friction.

17. Utilisation de la novolaque de lignine-phénol suivant la revendication 4, comme liant pour la préparation de masses de façonnage durcissables.

18. Utilisation de la novolaque de lignine-phénol suivant la revendication 4, comme liant pour la préparation de corps de moulage.

19. Utilisation de la novolaque de lignine-phénol suivant la revendication 4, comme liant pour la préparation de masses de pressage.

20. Utilisation de la novolaque de lignine-phénol suivant la revendication 4, comme liant pour la préparation de voiles textiles.

21. Utilisation de la novolaque de lignine-phénol suivant la revendication 4, comme liant pour la préparation de masses réfractaires.

22. Utilisation de la novolaque de lignine-phénol suivant la revendication 4, comme liant pour la préparation de garnitures de friction.
